# EUROPEAN PATENT APPLICATION

(11) **EP 4 439 750 A1**
(43) Date of publication of application: **02.10.2024**
(21) Application number: 23220399.2
(22) Date of filing: 27.12.2023
(51) Int. Cl.: H01M 10/04, H01M 10/0583, H01M 10/0587, H01M 10/052, B32B 37/02

(54) **APPARATUS AND METHOD FOR MANUFACTURING AN ELECTROCHEMICAL CELL FOR PRODUCING BATTERIES**

(30) Priority: 31.03.2023 IT 202300006432
(71) Applicant: G.D S.p.A., 40133 Bologna (BO) (IT)
(72) Inventor: BIONDI, Andrea, 40133 Bologna (BO) (IT); CAMPAGNOLA, Enrico, 40133 Bologna (BO) (IT); CAVAZZA, Luca, 40133 Bologna (BO) (IT); VENTURA, Maurizio, 40133 Bologna (BO) (IT)
(74) Representative: Locas, Davide

(57) **Abstract**

An apparatus for manufacturing an electrochemical cell comprises: a feed unit configured to feed conductor elements and at least one separator element, a coupling unit for coupling said conductor elements and said at least one separator element into a semi-finished product with an overlappedlayer structure, a first moving device configured to displace said semi-finished product along an operative path between a first position and a second position, distinct from each other, a finishing device configured to perform a finishing processing on said electrochemical cell, and a second moving device configured so as to displace the finishing device so as to perform said finishing processing, at least partially, while the semi-finished product is displaced between said first position and said second position, so that said semi-finished product is displaced along said operative path with a continuous motion.

## Description

The present invention relates to an apparatus for manufacturing an electrochemical cell, for example of the type formed by coupling into layers conductor elements and at least one separator element.

The invention is also directed to a method for manufacturing the same electrochemical cell.

The present invention finds a preferred, although not exclusive, application in the sector of the production of electrochemical cells, for the manufacture of which a semi-finished product with a structure with overlapped layers is used, which are for example in the form of a coil or stacked.

In particular, in the pertinent technical sector, it is known to combine conductor elements and separator elements into layers in order to form an anode and cathode structure. The article manufactured by overlapping the aforementioned layers can therefore be wound in the form of a coil or coupled into layers in flat or other shape configurations, and used for manufacturing the electrochemical cell itself.

In this description as well as in the claims appended thereto, certain terms and expressions are deemed to have, unless otherwise expressly indicated, the meaning expressed in the following definitions.

The term "strip-shaped article" is intended to mean any solid product which, within an industrial production line, is presented in the form of an elongated strip or ribbon, i.e. an element in which the longitudinal extension is significantly higher than its transversal extension. The strip-shaped article can be formed by a single strip or ribbon of material, or by overlapping several strips arranged into layers.

The strip-shaped article also has features such that a certain bending during its advancement along a relative production line is allowed.

The strip-shaped article can for example be made by overlapping conductor and insulating layers alternated between them and be intended to form a sandwich to be wound for manufacturing a coil intended for producing electrochemical cells.

A further example can be represented by a strip-shaped article formed by an insulating strip that acts as a separator between conductor elements. The insulating strip-shaped article can thus be folded according to a "Z" arrangement, by interposing between one loop and another of the "Z" alternately conductor elements in the form of foils that respectively form the anode and cathode of the electrochemical cell.

The strip-shaped article can also be pre-cut, forming individual sheets intended to be stacked in a mainly vertical development structure.

By the term "coupling" referred to a strip-shaped article is intended to mean to combine the strip-shaped article with a further element, or combine different portions of the strip-shaped article with each other, so as to obtain a structure of a different shape from the strip-shaped article, preferably with a non-strip-shaped form, such as for example a coil or a folded.

The term "to wind" referred to a strip-shaped article, indicates a preferred way of coupling the strip-shaped article, by which it is coupled into a spiral structure by rotation about an axis, to a flat surface or another structure. By winding, the strip-shaped article will form one or more turns about the axis or structure.

By the term "coil" is intended any spiral structure formed by winding a strip, a ribbon or more generally a strip-shaped article about an axis, a flat surface or another winding structure. Depending on the structure about which the strip-shaped article is wound, the overall shape of the coil may be substantially cylindrical rather than crushed or otherwise shaped.

As mentioned above, the coil can find application not only in the electrochemical cell sector but also in other sectors, such as for example in the conductor sector, within which coil-shaped structures can likewise be used.

By the term "poly-coupled article" is intended to mean any solid product obtained by coupling a plurality of elements or a plurality of different portions of a single element. For example, the poly-coupled article can be formed by winding a strip-shaped article, for example in the form of a coil, or by coupling a strip-shaped article with other elements, such as for example conductor elements that can be arranged between loops of a strip-shaped article folded into a "Z" shape, and coupled to it in a folded configuration, as previously illustrated.

Yet another example is represented by stacked solutions, in which individual foils of insulating material and individual foils of conductive material are overlapped into layers, coupling them together in an alternating configuration.

By the term "semi-finished product with an overlapped-layer structure" with reference to a poly-coupled article, it is intended an intermediate product used in the manufacture of the poly-coupled article itself. The semi-finished product with an overlapped-layer structure includes a plurality of layers that can be represented by the successive windings of a spirally wound strip-shaped article, or by the alternating layers formed by a "Z"-folded strip-shaped article and by the conductor elements in the form of foils, or again by the foils overlapped into layers that form the stacked solutions previously illustrated. The poly-coupled article is manufactured by using the semi-finished product with an overlapped-layer structure and carrying out subsequent finishing processings.

By the term "finishing processings" it is therefore intended one or more operations successive forming the poly-coupled article that are required for obtaining the finished product, such as the electrochemical cell. The finishing operations or processings may e.g. comprise the application of at least one strip capable of locking a flap or other portion of the semi-finished product with an overlapped-layer structure in order to keep the structure in the configuration obtained by winding or other type of coupling. A further example of a finishing operation can also be represented by marking operations, for example by laser, or also by welding and/or gluing operations, or other operations suitable for applying inserts.

By the term "flap" is intended to mean any portion of the strip-shaped article, or more generally of a separator or conductor element, preferably located at an edge or an end thereof, and which defines a terminal part of the semi-finished product once formed. It should also be noted that more than one flap may also be defined on a semi-finished product.

By the term "closed path" is intended to mean a path travelled by a winding head or other element in which the initial point and the end point of the path substantially coincide.

By the term "continuously" referred to an expression of motion, it is intended to mean an operation that takes place without interruption, without there being a stop or an interruption in the operation in question. In particular, with reference to the movement of a strip-shaped article, a semi-finished product, or another element, the term "continuous motion", or even "continuously" alone, indicates that the strip-shaped article/semi-finished product/element is never stopped during its movement. The movement can in any case be slowed down, as an acceleration and deceleration of the strip-shaped/semi-finished product/element is therefore envisaged without, however, this leading to a complete stop. It will be appreciated that the strip-shaped/semi-finished product/element may be expected to reach an absolute speed equal to zero, in the event that the motion provides for a reversal. In this case, however, the strip-shaped/semi-finished product/element can be subjected to a non-null acceleration at the moment when it reaches zero speed, so as to avoid stopping the movement.

By the term "substantially constant" referred to a measure or amount, such as for example the displacement speed of an object, it is intended to mean that such measure or amount maintains, over time, a value which preferably varies by a maximum of ±10%, preferably by a maximum of ±5%, preferably by a maximum of ±2%.

By the term "integral" referred to the movement of two or more elements, it is intended to mean that these elements perform substantially the same movement and substantially in a simultaneous manner. In other words, two integral elements move together, as a single body, although they are not necessarily joined or bound to each other. It can in fact be provided that the respective movement systems of the two elements are coordinated so as to move, when necessary, the two elements together. Furthermore, it may be provided for the use of a temporary constraint between the two elements which, for example, joins them to each other in some steps, causing them to move together, and separates them again, making them movable independently of each other.

It should also be noted that by the expression "to displace an object between a first position and a second position" it is intended to mean both the displacement from the first position to the second position and the displacement from the second position to the first position.

This definition applies in an analogous way to similar expressions of motion, such as for example to transfer or to move a generic object between two positions or between two zones or even between two different operative configurations.

Preferably, by the term "to displace along a path between a first position and a second position, distinct from each other", referred to a coupling device, to a structure or more generally to a component, it is intended to mean a displacement between two distinct spatial positions, during which the centre of mass changes position along said path.

Thus such displacement excludes rotations of the coupling device/structure/component about a point substantially coincident with its centre of mass.

For example, in the case of a spiral, rotations about the axis of the spiral, which specifically is considered substantially coincident with the centre of mass of the same, will be excluded, although they may not be perfectly coincident due to the distribution of the material and the relative masses that are not necessarily uniformly distributed about the axis of the spiral.

Other movements of the spiral will instead be included in the definition of displacement along a path between a first position and a second position, distinct from each other. Therefore, for example, linear displacements, rotational-translational motions and rotations about an axis that do not coincide with the axis of the spiral, i.e. the axis about which the spiral shape is created, are included.

The Applicant, in the context of the constant need to increase the performance and the efficiency of the production processes for manufacturing electrochemical cells comprising a poly-coupled article, has preliminarily observed how the finishing operations necessary for manufacturing the poly-coupled article can constitute a significant element of limitation of the production capacity of the line itself.

The Applicant has in fact observed that high speeds in the coupling process of the poly-coupled article, obtained for example by increasing the winding speed of the conductor and separator elements forming the poly-coupled article can be undermined in the event that the subsequent operations cause a slowdown in the production process as a whole.

Furthermore, this limitation is even more critical if the production process provides a movement of the semi-finished products used to manufacture the poly-coupled article during the process for processing it. In particular, the Applicant has observed that as the movement speed of the semi-finished product increases, it is increasingly complex to carry out finishing processings with the required precision.

This need results in a limit in the productivity of the production line, as it is typically necessary to stop or at least slow down the movement of the semi-finished product in order to guarantee the necessary precision in the finishing processings.

In order to increase the speed for manufacturing the poly-coupled article, the Applicant has therefore perceived that by setting in motion, in addition to the semi-finished product, also the device designed to carry out one or more of the finishing processings required for the manufacture of the poly-coupled article, it is possible to carry out the required processings without stopping the semi-finished product or in any case limiting the slowdown thereof.

The Applicant has therefore further perceived how it is possible to increase the productivity of a production line of poly-coupled articles compared to the known solutions if it is possible to keep the semi-finished product moving, preferably with a constant speed or in any case without significant slowdowns, during the finishing operations.

Finally, the Applicant has found that by providing a specific moving device designed to move the device through which the finishing processing takes place, it is possible to appropriately coordinate the finishing processing and the movement of the semi-finished product.

Thanks to these features, the finishing operations can be carried out during the movement of the semi-finished product, without this causing a possible risk of damaging the structure of the semi-finished product to be subjected to the finishing operation and, consequently, it allows this objective to be achieved without introducing limitations in the movement speed of the semi-finished product itself.

In a first aspect thereof, therefore, the present invention is directed to an apparatus for manufacturing an electrochemical cell comprising a semi-finished product with an overlapped-layer structure.

Preferably said semi-finished product with an overlapped-layer structure includes a plurality of conductor elements and at least one separator element.

Preferably said apparatus comprises a feed unit configured to feed said conductor elements and said at least one separator element.

Preferably said apparatus comprises a coupling unit including at least a coupling device configured to couple said conductor elements and said at least one separator element, preferably according to a predetermined layered arrangement, so as to manufacture said semi-finished product with an overlapped-layer structure.

Preferably, said apparatus comprises a first moving device preferably configured to displace said semi-finished product with an overlapped-layer structure along an operative path between a first position and a second position, distinct from each other.

Preferably said apparatus comprises a finishing device configured to perform a finishing processing of said electrochemical cell.

Said apparatus comprises a second moving device configured so as to displace said finishing device so as to at least partially perform said finishing processing while said first moving device displaces said semi-finished product with an overlapped-layer structure along said operative path between said first position and said second position, so that said semi-finished product with an overlapped-layer structure is displaced along said operative path with a continuous motion.

Thanks to these features, the apparatus for manufacturing an electrochemical cell can carry out the finishing processing while the semi-finished product is moved through the relative moving device, without the need to slow it down or stop it.

The finishing device can in fact move while it performs the finishing processing, following the semi-finished product in a tract of its path.

In this way it is possible to predict the movement of the semi-finished product, possibly following the manufacture thereof, and make the finishing operations faster, being possible to carry them out during the relative movement. This therefore permits to make the apparatus as a whole faster than the known solutions, while guaranteeing the quality required in the structure of the poly-coupled article, limiting the risk of the structure of the semi-finished product of being damaged during the finishing processings, thanks to the possibility of performing the finishing operations at a speed similar to or at least comparable to the one at which the semi-finished product is moved.

In a second aspect thereof, the present invention relates to a method for manufacturing an electrochemical cell comprising a semi-finished product with an overlapped-layer structure, preferably including a plurality of conductor elements and at least one separator element, preferably for an electrochemical cell intended for producing batteries.

Preferably said method comprises providing a plurality of conductor elements and at least one separator element.

Preferably said method comprises coupling into layers, according to a predetermined arrangement, said conductor elements and said at least one separator element so as to form a semi-finished product, preferably with an overlapped-layer structure.

Said method preferably comprises displacing said semi-finished product with an overlapped-layer structure along an operative path between a first position and a second position, distinct from each other, said displacing said semi-finished product with an overlapped-layer structure being carried out by a continuous motion.

Said method preferably comprises performing, at least partially, a finishing processing of said electrochemical cell while said semi-finished product with an overlapped-layer structure is displaced along said operative path between said first position and said second position.

Also the method according to this aspect allows to manufacture poly-coupled articles at a higher speed than known solutions and without interruptions in the advancement of the semi-finished product, thanks to the possibility of carrying out the finishing processing while the semi-finished product is displaced. The displacement of the semi-finished product can in fact be coordinated with that of the device designed to carry out the finishing processing.

In a third aspect thereof, the present invention concerns an apparatus for manufacturing a poly-coupled article which comprises a semi-finished product with an overlapped-layer structure including at least one strip-shaped article. The poly-coupled article is preferably intended for manufacturing an electrochemical cell for producing batteries.

Said apparatus preferably comprises a feed unit configured to feed said at least one strip-shaped article.

Preferably said apparatus comprises a coupling unit including at least a coupling device configured to couple said strip-shaped article in said semi-finished product with an overlapped-layer structure intended to form said poly-coupled article.

Preferably said apparatus comprises a first moving device preferably configured to displace said coupling device. Preferably, said first moving device is configured to displace said semi-finished product with an overlapped-layer structure along an operative path between a first position and a second position, distinct from each other.

Preferably said apparatus comprises a finishing device configured to perform a finishing processing of said poly-coupled article.

Preferably said apparatus comprises a second moving device configured so as to displace said finishing device so as to at least partially perform said finishing processing while said first moving device displaces said semi-finished product with an overlapped-layer structure along said operative path between said first position and said second position.

Thanks to these features, the apparatus for manufacturing a coil can carry out the finishing processing while the semi-finished product is moved by the relative moving device, without the need to slow it down or stop it.

The finishing device can in fact move while it performs the finishing processing, following the semi-finished product in a tract of its path.

In this way it is possible to operate at higher speeds than known solutions, while guaranteeing the quality required in the structure of the poly-coupled article, thanks to the possibility of performing the finishing operations at a speed similar or at least comparable to the one at which the semi-finished product is moved.

In a fourth aspect thereof, the present invention concerns a method for manufacturing a poly-coupled article which comprises a semi-finished product with an overlapped-layer structure including at least one strip-shaped article, preferably for an electrochemical cell intended for producing batteries.

Preferably said method comprises providing at least one strip-shaped article.

Preferably said method comprises forming a semi-finished product with an overlapped-layer structure, preferably by coupling into layers said strip-shaped article.

Said method preferably comprises displacing said semi-finished product with an overlapped-layer structure along an operative path between a first position and a second position, distinct from each other.

Preferably said method comprises performing, at least partially, a finishing processing of said poly-coupled article while said semi-finished product with an overlapped-layer structure is displaced along said operative path between said first position and said second position.

Also based on this aspect it is possible to achieve the same advantages described in relation to the previous aspect.

The present invention, in at least one of the aforementioned aspects, may have at least one of the further preferred features indicated below.

Preferably said finishing device is configured so as to lock a flap of said strip-shaped article in said semi-finished product with an overlapped-layer structure. Preferably said finishing processing comprises locking a flap of said at least one separator element (N2, N4) and/or said conductor element (N1, N3) in said semi-finished product with an overlapped-layer structure.

Thanks to this feature, it is possible to lock the structure of the semi-finished product once it has been manufactured by coupling. The locking can be carried out during the movement of the semi-finished product, therefore without it being stopped. In addition, the simultaneous movement of the finishing device and of the semi-finished product allows the flap to be locked in a precise manner even in the context of high movement speeds of the semi-finished product, reducing the possibility of obtaining waste during the processing process.

It will be appreciated that the locking may be carried out on one or more flaps, for example in the case where more separator elements or conductor elements are used, each defining a respective flap.

Preferably said finishing device is configured so as to apply a locking element to said flap, said locking element preferably being a locking strip. Preferably, locking said flap of said at least one separator element (N2, N4) and/or said conductor element (N1, N3) comprises applying a locking element to said flap, said locking element preferably being a locking strip.

It will be appreciated that the application of a locking strip, or other locking element, lends itself particularly well to being carried out while the semi-finished product is moving. It should also be observed that the application of one or more strips/locking elements may be therefore envisaged, since situations in which a plurality of strips/locking elements are used are also envisaged.

Preferably said apparatus comprises an abutment device configured so as to abut said flap during or immediately prior to the application of said locking element. Preferably it is provided to retain said flap, preferably by abutting an abutment device, during or immediately prior to the application of said locking element.

Thanks to these features it is possible to avoid, or at least reduce the risk, that the flap to be locked is displaced during the finishing operations, thus allowing the overlapped-layer structure of the semi-finished product to keep the geometric and dimensional precision required by the application. By retaining the flap through the use of an abutment element, it is also possible to carry out this operation by exploiting the movement of the semi-finished product itself.

Preferably, said first moving device is configured so as to displace said at least one coupling device and said semi-finished product with an overlapped-layer structure according to a translation direction. Preferably displacing said semi-finished product with an overlapped-layer structure along said operative path between said first position and said second position, comprises translating said semi-finished product with an overlapped-layer structure according to a translation direction.

The Applicant has observed that by providing a translation in the movement of the semi-finished product it is possible to appropriately coordinate the coupling of the strip-shaped article with this translation movement, for example by performing the winding of the strip-shaped article during this movement.

Preferably, said translating said semi-finished product is preferably performed according to a reciprocating motion.

Thanks to this feature, it is possible to provide for a movement of the semi-finished product towards and away from a feed unit of the strip-shaped article, or other components of the apparatus, during the coupling of the strip-shaped article itself. In this way, the strip-shaped article can be accumulated during a part of the movement and the coupling can be carried out during another part of the movement, allowing the coupling to be carried out with a continuous feed of the strip-shaped article.

Preferably, said translation direction defines a straight movement trajectory of said at least one coupling device and semi-finished product with an overlapped-layer structure. Preferably, said translating said semi-finished product is performed with straight trajectory.

In this manner it is possible to obtain a precise movement which is easily controllable with a structure which is cinematically simple and stable.

Preferably, said first moving device comprises a movable support configured so as to displace, relative to a fixed frame, said at least one coupling device and said semi-finished product with an overlapped-layer structure according to said translation direction, preferably according to a reciprocating motion.

These features allow performing the translation of the semi-finished product and, advantageously, the movement with reciprocating motion of the same, with a constructionally simple solution capable of allowing high speeds without requiring complex movement systems.

Preferably said finishing device is supported on a support device. Preferably said second moving device is configured so as to displace said support device and said finishing device. Preferably, it is provided to displace said finishing device while performing said finishing processing.

In this way it is possible to use finishing devices with similar features or in any case comparable with those traditionally used, providing a specific support for the relative movement. In addition, the use of a support device lends itself particularly well to carrying out the finishing processing while moving, always to the benefit of execution speed.

Preferably the finishing device comprises a roller preferably configured to take and deposit the locking strip. Preferably said roller is configured to rotate about an application axis by means of a respective movement mechanism. Preferably, it is provided to take and deposit said locking strip by means of a roller. Preferably said method comprises rotating said roller with said locking belt about an application axis preferably parallel to said rotation axis of said finishing device.

In this way, the risk of ruining the structure of the semi-finished product during the application of the strip is limited.

Preferably said moving device is configured so as to have said support device swing about a rotation axis. Preferably, it is generally provided to have said finishing device swing about a rotation axis.

Thanks to this feature, it is possible to move the finishing device towards and away from the semi-finished product through a simple and easily controllable movement.

Preferably said support device is mounted on said fixed frame. In this way it is possible to keep the components designed for the movement of the finishing device stationary during the movement carried out during the coupling of the strip-shaped article and the consequent manufacture of the semi-finished product.

Preferably said support device is mounted on said movable support.

This feature makes it possible to simplify the coordination between the movement of the finishing device and that of the semi-finished product during the finishing operations. Furthermore, the distance travelled by the finishing device to perform the finishing processing can be advantageously reduced.

Preferably said second moving device is configured so as to keep said finishing device in contact with said semi-finished product with an overlapped-layer structure while it is displaced by said first moving device. Preferably said finishing device follows said semi-finished product with an overlapped-layer structure, so as to remain in contact with said semi-finished product with an overlapped-layer structure, while it is displaced while performing said finishing processing.

In this way it is possible to obtain a high precision in the finishing processing as a finishing and semi-finished device can be integral while performing the processing and therefore carry out the same with modes that are at least comparable to those in which it takes place with the stopped semi-finished product.

Preferably said second moving device is configured so as to keep said finishing device in contact with said semi-finished product with an overlapped-layer structure in a reversal of said reciprocating motion. In general, preferably said finishing device is in contact with said semi-finished product with an overlapped-layer structure when it reverses a displacement direction thereof in said reciprocating motion.

In this way, the finishing processing can take place, at least partially, when the movement of the semi-finished product takes place at a reduced speed, that is, when the displacement direction is reversed in the case of reciprocating motion.

This advantageously allows displacing the finishing device at a speed that is not particularly high to be sufficient, thus permitting to make it easier to control the second moving device and generally obtain high precision in the finishing operations.

Preferably said method comprises displacing said at least one coupling device together with said semi-finished product with an overlapped-layer structure while it is displaced between said first position and said second position.

It will be appreciated that thanks to this feature the movement of the semi-finished product from the first to the second position, i.e. the two positions that define the path along which the finishing operation occurs, can take place without the semi-finished product being unloaded from the coupling device.

Preferably said at least one coupling device is configured so as to rotate about a first rotation axis. Preferably said at least one coupling device is configured so as to rotate about a second rotation axis, preferably parallel to said first rotation axis. Said finishing device is preferably configured so as to perform said finishing processing while said at least one coupling device and/or said semi-finished product with an overlapped-layer structure rotate/rotates about said first rotation axis and/or while said at least one coupling device and/or said semi-finished product with an overlapped-layer structure rotate/rotates about said second rotation axis.

Preferably, it can be provided to rotate the respective coupling device about a first rotation axis to couple, preferably by spiral winding, said strip-shaped article. Preferably, it may also be provided to rotate said at least one coupling device about a second rotation axis, preferably parallel to said first rotation axis.

Preferably said finishing processing is performed while said at least one coupling device and/or said semi-finished product with an overlapped-layer structure rotate/rotates about said first rotation axis and/or while said coupling device and/or said semi-finished product with an overlapped-layer structure rotate/rotates about said second rotation axis.

Preferably said finishing device is configured so as to perform said finishing processing on said semi-finished product with an overlapped-layer structure while said first moving device and said semi-finished product with an overlapped-layer structure move according to said translation direction.

These characteristics allow to make optimal use of the movement of the semi-finished product during the finishing processing. In fact, the rotation about the first rotation axis, which can coincide with the axis about which the strip-shaped article is wound in the event that it is spirally coupled, can also be advantageously used to arrange a locking strip in order to retain the end flap of the semi-finished product. In this way, a same motorization system can perform two different functions.

Similarly, the finishing processing, such as precisely for example the application of a locking strip, can take place during the rotation about the second axis, which for example can be represented by the axis about which the coupling devices are rotated, if more than one is present, to be displaced between different stations of the apparatus. Consequently, with the same rotation by which the coupling devices are switched, it is possible to move the semi-finished product while performing the finishing processing.

The movement in the translation direction can also be advantageously used to obtain an accumulation of the strip-shaped article during the coupling thereof to form the semi-finished product, as illustrated above. Consequently, a same moving device can also be used for the finishing processing in analogy with what is illustrated in relation to the rotations about the first and second rotation axis.

Preferably said finishing device is configured so as to perform said finishing processing while said at least one coupling device and said semi-finished product with an overlapped-layer structure move according to a rotation about a third rotation axis. In general, it may be provided to rotate said at least one coupling device about a third rotation axis.

This rotation can be used to have the coupling device travel a specific trajectory, possibly combined with a translation, in order to optimize the movement of the semi-finished product and the arrangement of the components of the apparatus.

Preferably, the first moving device is configured so as to displace said coupling device between a coupling position wherein said strip-shaped article is coupled, preferably corresponding to said first position, and a finishing position wherein said finishing processing is performed on said semi-finished product with an overlapped-layer structure that is obtained from the coupling of said strip-shaped article, preferably arranged upstream of said second position, said displacement between said coupling position and said finishing position being adapted to define a working path, said apparatus further comprising a cutting device configured so as to cut said strip-shaped article at a cutting zone defined along said working path at an intermediate position between said coupling position and said finishing position. In general, it may preferably be provided to cut said strip-shaped article preferably following said forming said semi-finished product with an overlapped-layer structure by coupling into layers said strip-shaped article and prior to said performing said finishing processing.

The provision of a cutting device along a path along which the semi-finished product is moved makes it possible to exploit a part of the process for manufacturing the poly-coupled article to cut the strip-shaped article, with a consequent optimisation of the production process. Advantageously, the strip-shaped article can be cut following the formation of the semi-finished product and prior to the finishing processing so that the latter is not hindered or in any case made more complex by the presence of the strip-shaped article.

Preferably said cutting device comprises a knife and an auxiliary roller, preferably located downstream of said knife, and configured so as to urge said strip-shaped article, preferably at said flap, into a stretched configuration. Preferably said cutting said strip-shaped article comprises urging, preferably downstream of a cutting zone, said strip-shaped article into a stretched configuration.

Preferably, it is provided to grasp said strip-shaped article by means of said at least one coupling device so as to retain said strip-shaped article while it is coupled into layers, and to retain said semi-finished product with an overlapped-layer structure by said coupling device while it is displaced between said first position and said second position and while said finishing processing is performed.

Preferably said at least one coupling device is configured to retain said strip-shaped article, is coupled in said semi-finished product with an overlapped-layer structure and retain said semi-finished product with an overlapped-layer structure while said finishing processing is performed. In this way it is possible to keep the strip-shaped article/semi-finished product on the coupling device, therefore on the same element, during at least part of the process, so as to limit, where possible, the unloading operations of the semi-finished product and thus guarantee productivity and precision in processing.

Preferably at least one of said conductor elements and/or said at least one separator element is formed by said strip-shaped article. Preferably said conductor elements and said at least one separator element are formed by a respective strip-shaped article. In this way it is possible to provide the conductor elements and the separator elements continuously, to the benefit of the speed of the process for manufacturing the poly-coupled article.

It should be specified that some steps and some characteristics of the methods described above may be independent of the order of execution reported. Furthermore, one or more steps of the methods may be performed repetitively, or may be performed in series or in parallel with other steps of the method.

The characteristics and advantages of the invention will become clearer from the detailed description of a preferred embodiment thereof, illustrated by way of non-limiting example, with reference to the appended drawings wherein:
- Figure 1 is a side view, partially in perspective, of the apparatus according to the present invention;
- Figure 2 is an enlarged detail of the apparatus of Figure 1;
- Figure 3 is a further enlarged detail of the apparatus of Figure 2;
- figures from 4A to 4D are schematic views illustrating the apparatus of the present invention in different operative positions, as well as exemplifying the method of the present invention.

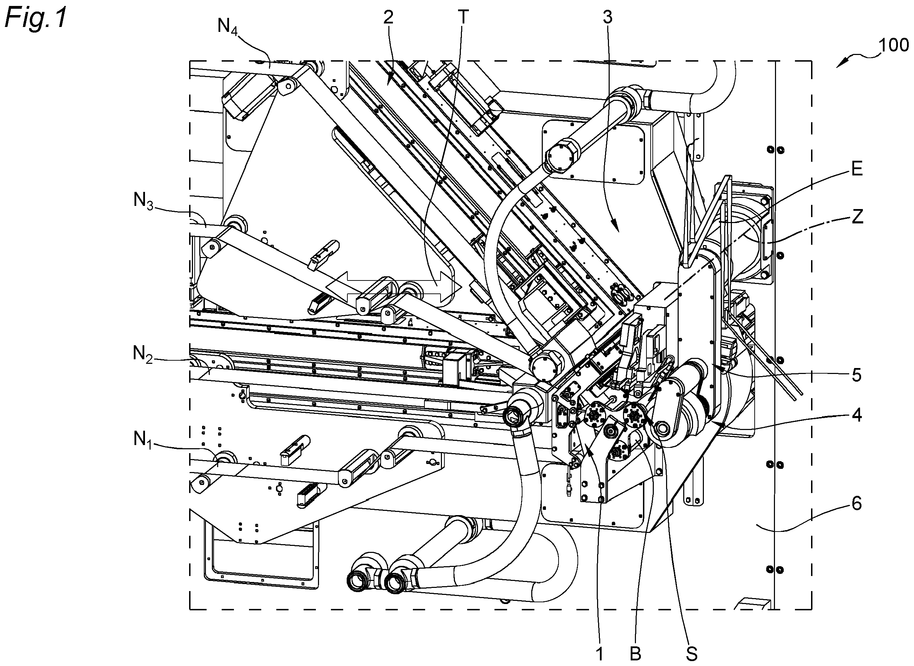

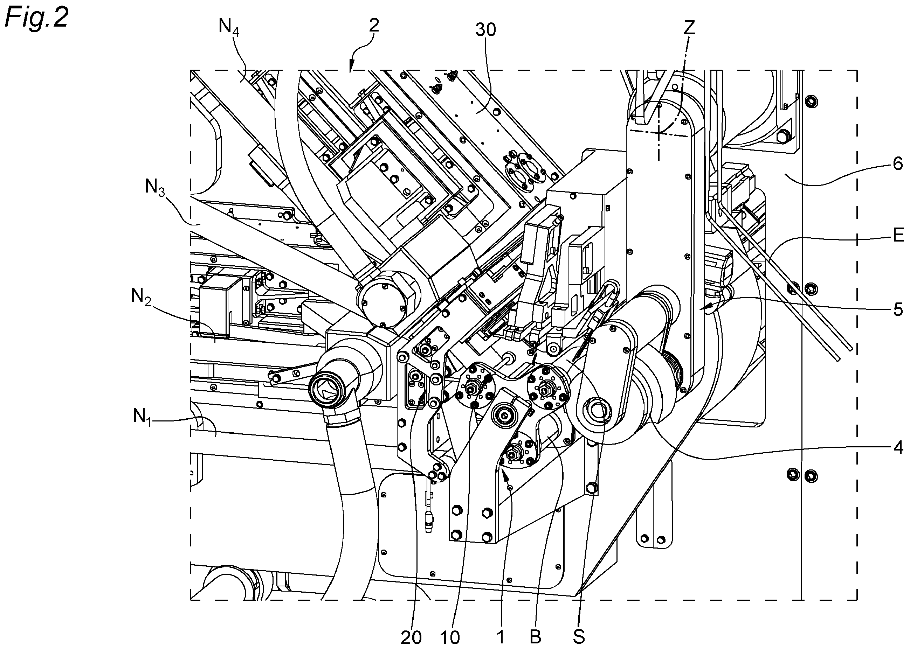

With reference initially to Figures 1 and 2, an apparatus for manufacturing a poly-coupled article B made in accordance with the present invention is indicated as a whole with 100.

In some embodiments, such as the one illustrated in the attached figures, the apparatus 100 is intended for producing coils to be used in the manufacture of electrochemical cells.

As will be described in any case in further detail below, the present invention can also find application in poly-coupled articles of other types, not necessarily intended for manufacturing electrochemical cells.

Preferably the manufacture of the poly-coupled article B by means of the apparatus 100 of the present invention is carried out starting from two conductors N1, N3 and two separator elements N2, N4. These elements can then be suitably combined to make an overlapped-layer structure in which the anode, formed by a conductor element, a first separator, the cathode, formed by the second conductor element, and a second separator alternate. The order between anode and cathode is provided only by way of example and a sequence opposite to the one previously indicated may also be envisaged. More generally, in fact, the poly-coupled article may comprise an alternating sequence of conductor elements and separator elements.

In some embodiments, one or more of the conductor elements and/or one or more of the separator elements can be formed by a strip-shaped article which, as will be illustrated in detail below, is processed so as to obtain a semi-finished product with an overlapped-layer structure S to be used for manufacturing the poly-coupled article itself.

In other words, the present invention can find application both in the case in which both the conductor elements and the separator elements are in the form of single foils, stacked in a succession of alternating layers, and in the case in which one or more of the conductor elements and/or one or more of the separator elements are formed by single sheets, which can possibly be obtained from a strip by cutting.

For example, it may also be provided that a single strip-shaped article is used which, for example, can form the separator element of an electrochemical cell to be coupled to conductor elements, for example in the form of foils, always for the purpose of forming an overlapped-layer structure.

In preferred embodiments, such as that illustrated in Figure 1, a plurality of strip-shaped articles N1, N2, N3, N4 are used. For example, in the case where the poly-coupled article B preferably is formed by alternately arranged conductor strips and separator strips.

Still with reference to Figure 1, the strip-shaped articles N1, N2, N3, N4 are fed by means of a feed unit 2.

In this feed unit 2 the strip-shaped articles are advanced and directed towards an outlet section 20 at which they converge towards a coupling unit 1 where they are coupled into a single structure.

Preferably the structure formed by the coupling of the strip-shaped articles N1, N2, N3, N4 is a semi-finished product with an overlapped-layer structure S, in which each layer is represented by one of the strip-shaped articles.

In the coupling unit 1, the strip-shaped articles N1, N2, N3, N4 can be coupled by winding into the spiral form, so as to obtain a coil structure.

In other embodiments, not illustrated in the figures, one or more strip-shaped articles can be folded into successive loops, with a substantially "Z" development and coupled, alternately, to anode elements and cathode elements in the form of foils.

In further embodiments, also not illustrated in the figures, the feed unit 2 can be configured so as to feed a plurality of conductor elements and a plurality of separator elements, which are coupled into a stacked configuration in the coupling unit 1.

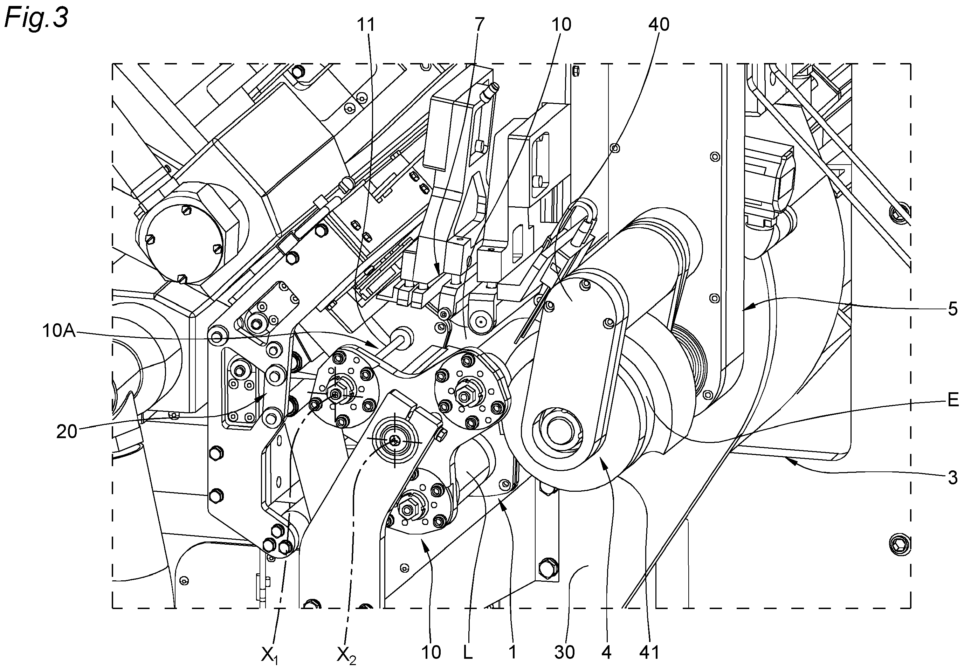

In general, therefore, it can be provided for at least a coupling device 10, illustrated in a preferred embodiment thereof in Figure 3, configured to couple the strip-shaped article(s) N1, N2, N3, N4, and more generally the conductor and separator elements, in said semi-finished product with an overlapped-layer structure S.

For example, the coupling device 10 may be configured so that the strip-shaped articles N1, N2, N3, N4 converge thereon and, preferably, are wound into a spiral shape.

For this purpose, the coupling device 10 can be configured to retain said strip-shaped article N1, N2, N3, N4 while it is coupled into layers in said semi-finished product with an overlapped-layer structure S.

For this purpose, in some embodiments it may be provided that the coupling device 10 comprises a gripping device 10A.

Advantageously, the gripping device can be made by means of a rotating mandrel 11 divided into two portions capable of moving independently of each other. In this way a portion of the strip-shaped articles can be interposed between the two portions of the rotating mandrel 11 and retained by approaching the two portions one against the other. In this way, the strip-shaped article can be grasped to carry out the coupling operation.

Similarly, by moving both portions away, the semi-finished product S can be unloaded once the coupling and, as will be seen below, any subsequent processings have been completed.

The rotating mandrel 11 can also be advantageously used to spirally wind the strip-shaped articles by rotation about a relative rotation axis X1.

More generally, it may be provided that the coupling device 10 is configured so as to rotate about said first rotation axis X1 while performing the coupling of the strip-shaped article(s).

As previously mentioned, in preferred embodiments, the coupling unit 1 comprises more than one coupling device 10.

The coupling devices 10 can be supported on a support 12, for example in the form of a disc, which rotates about a second rotation axis X2, preferably parallel to the first rotation axis X1, to alternate the operative position of the coupling devices 10.

Preferably the gripping devices 10 are arranged about the rotation axis X2 angularly equidistant.

In some embodiments, by rotation about the axis X2, the gripping devices 10 can be transferred from a station in which the coupling of the strip-shaped article(s) takes place, or at least begins, to a station in which a finishing processing of the semi-finished product S obtained by coupling takes place, to an unloading station.

More generally, however, the performance of the coupling operation and the performance of the finishing processing may also take place while the gripping device(s) is/are rotating about the rotation axis X2.

In addition to this movement, it can also be provided that the coupling device and the semi-finished product S can also move along a translation direction T.

It should be noted that in some embodiments, the translation direction is straight, i.e. it preferably defines a rectilinear movement trajectory of said at least one coupling device and said semifinished product with an overlapped-layer structure.

For this purpose, in some embodiments, the coupling unit 1 can be supported on a movable body 30, preferably translatable with reciprocating motion in the translation direction T.

Preferably, said movable body 30 can be in the form of a movable carriage that swings back and forth in the translation direction T.

As can be observed from Figure 1, the movable body 30 is configured so as to move relative to a fixed frame 6 of the apparatus 100.

In preferred embodiments, the movement along the translation direction of the winding devices 10, possibly carried out by means of the movable body 30, has the effect of varying the length of parallel tracts of the strip-shaped article(s).

This can allow an accumulation effect to be obtained and, by coordinating the movement in the translation direction with the winding or other type coupling operation, it is possible to form the semi-finished product in association with the movement of the winding device along the direction T. This can entail a series of advantages, in particular the possibility of increasing the manufacture speed of the semi-finished product and of avoiding or containing the onset of tension states on the strip-shaped articles during processing.

To perform one or more of the aforementioned movements, the apparatus 100 according to the present invention may comprise a first moving device 3 which is thus configured to displace the coupling device(s) 10, as well as the semi-finished product with an overlapped-layer structure S, at least along an operative path between a first position and a second position, distinct from each other.

The movement along this path can be defined by any combination of one or more rotations and of one or more translations, or by a single movement, whether of rotation or translation, provided that it is configured to make the coupling device(s) 10 and the semi-finished product with an overlapped-layer structure S assume two distinct spatial positions remote from each other. In other words, the movement must not be such that the coupling device(s) 10 and the semi-finished product with an overlapped-layer structure S perform a rotation only about their axis.

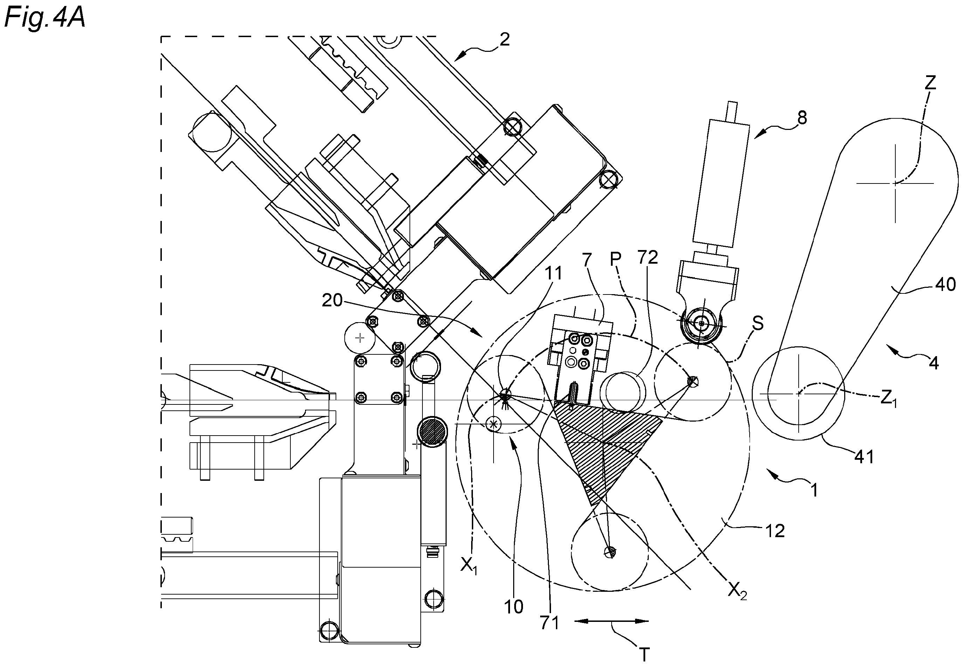

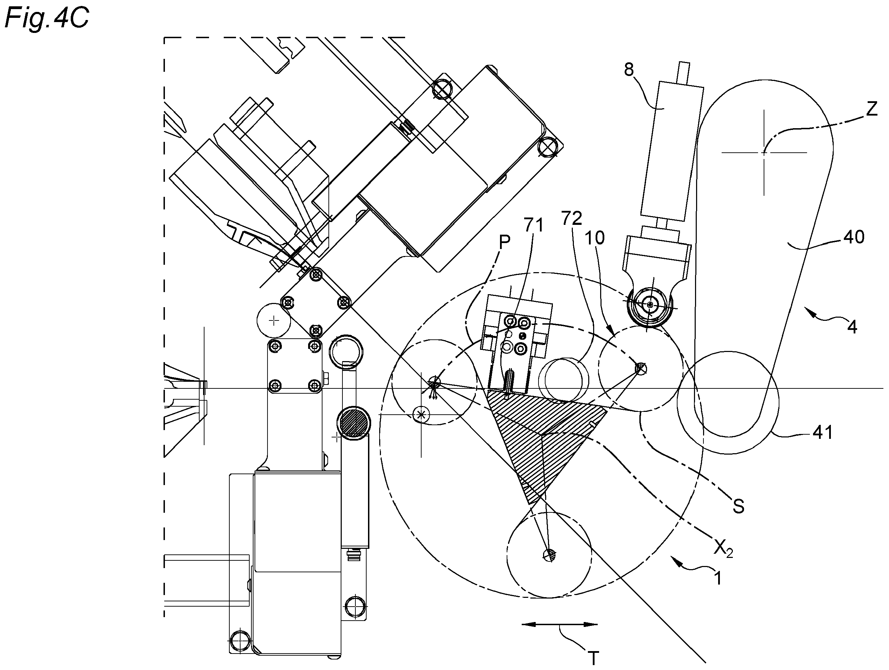

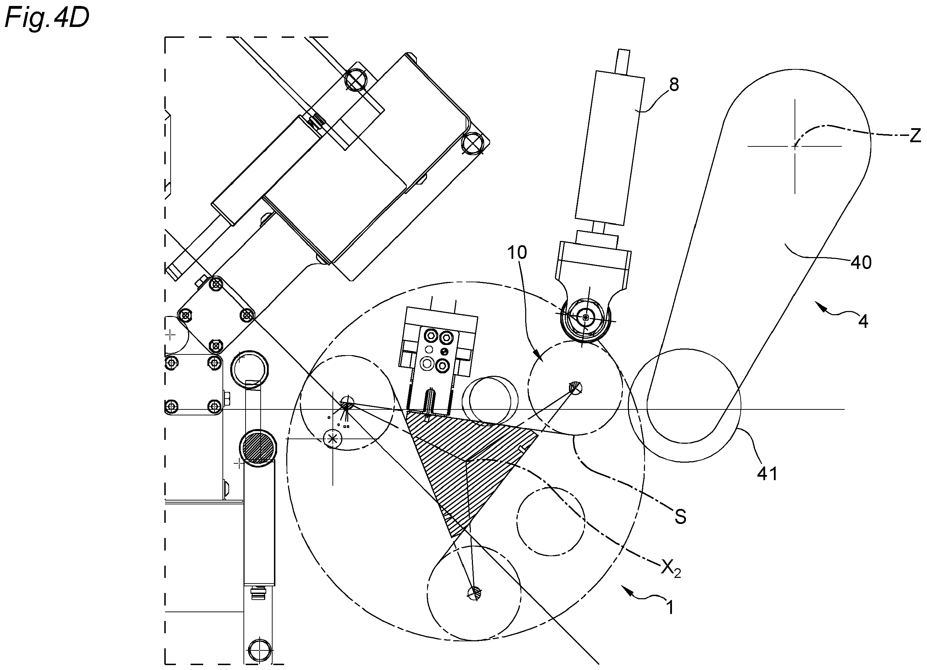

In the embodiment depicted in the figures, in particular figures from 4A to 4D, the operative path is represented by the displacement between a coupling position at which the strip-shaped articles are combined and the winding, or more generally the coupling, preferably begins, and an unloading position, illustrated in Figure 4C, in which an unloading device, not illustrated in the figure, picks up the semi-finished product after it has been subjected to a finishing processing, at a finishing position, as illustrated in greater detail below.

In the illustrated example, the coupling device 10, with the semi-finished product S once the winding thereof has begun, moves along the translation direction T and, at the same time, performs a rotation about the axis X1 to wind the strip-shaped article(s), as well as, possibly in a subsequent step, a rotation about the axis X2 to arrive at an intermediate position in which the finishing processing is performed and finally at the unloading position.

To obtain this combination of movements, for example, it can be provided that the movable body 30 supports a motorization, not illustrated in the figure, designed to rotate the disc-shaped support 12, which in turn supports a motorization designed to rotate a respective rotating mandrel 11 of the coupling devices.

More generally, it will be appreciated that the moving device 3 can comprise respective motorizations, each designed to perform one of the aforementioned movements, whether it is a rotation or a translation, or a transmission capable of having two or more different movements performed by a single motorization. Depending on the complexity of the trajectory or trajectories to be travelled by the coupling device(s) 10 and by the semi-finished product S, it will be possible to select the one solution or the other for the moving device 3.

It will also be appreciated that in alternative embodiments, not illustrated in the figure, it may also be provided for at least one further rotation movement, about a third rotation axis, in combination with or as an alternative to the previously described translation movement.

With reference now again to Figures 2 and 3, the apparatus 100 according to the present invention further comprises a finishing device 4 configured to perform a finishing processing of the poly-coupled article B.

In preferred embodiments, said finishing processing provides for locking a flap L of the strip-shaped article N1, N2, N3, N4 in said semi-finished product S. In other words, it may be provided to lock the final flap L of the strip-shaped article after it has been spirally wound or otherwise coupled, thus preventing it from being able to lose the structure obtained by the coupling operation. The locking preferably takes place by 3 applying, by means of said finishing device, a locking element E to the flap L. For example, the locking element E can be formed by a locking strip.

As can be observed from Figure 2, the locking strip can be supplied by means of one or more dispensing coils in which a quantity of strip is wound which is suitably sectioned prior to or during application on the semi-finished product.

In some embodiments, the finishing device 4 is supported on a support device 40 that is capable of swinging about a rotation axis Z.

The apparatus 100 further comprises a second moving device 5 associated with the finishing device. Preferably, the second moving device 5 is configured so as to displace said support device 40 and said finishing device 4, having it swing about the rotation axis Z or, more generally, having it make appropriate displacements in other embodiments.

In preferred embodiments, the second moving device 5 can be made, for example, by means of an electric motor, such as a rotary brushless one, or by means of a cam mechanism.

In some embodiments the finishing device 40 may comprise a roller 41 preferably configured to take and deposit the locking strip. Preferably, the roller 41 is also configured to rotate about an application axis Z 1 by means of a respective moving mechanism, not illustrated in the figure. Such a respective moving mechanism may for example comprise a brushless motor or a cam mechanism. It should be observed that in some embodiments, such as for example the one illustrated in the figures, the support device 40 is mounted on the fixed frame 6. Alternatively, according to further preferred embodiments, the support device 40 may also be mounted on the movable support 30.

It will also be appreciated that, at a general level, the second moving device 5 is configured so as to displace the finishing device 4 so that the finishing processing is performed, at least partially, while the first moving device 3 displaces the semi-finished product S along the aforementioned operative path.

The two moving devices are therefore coordinated with each other so that the finishing device 4 follows the semi-finished product S during at least a part of its movement.

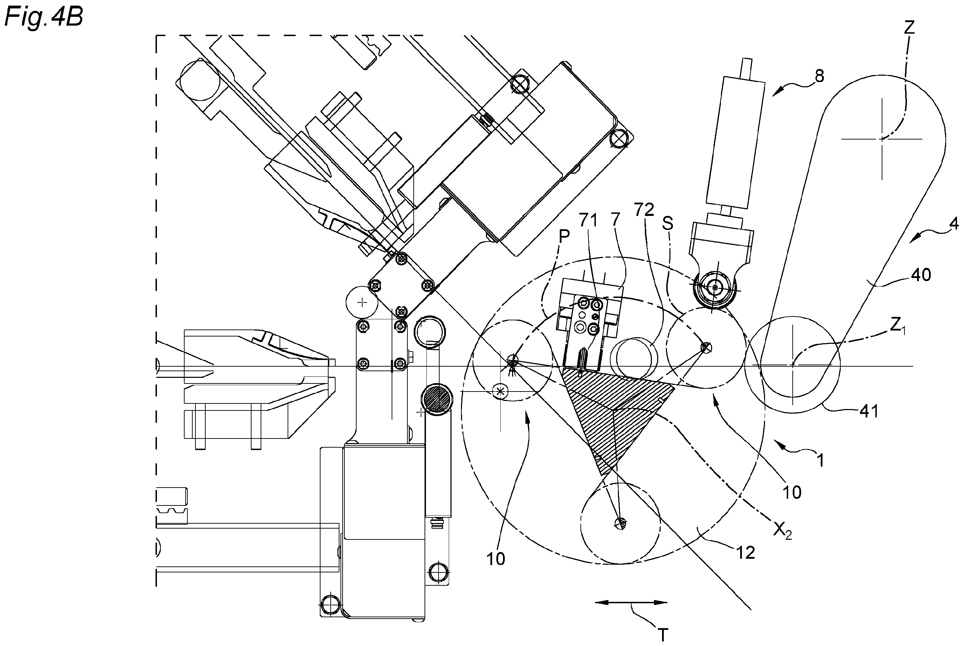

As can be observed from Figures 4B and 4C, the finishing device 4 is moved by the second moving device 5 so as to be in contact with the semi-finished product S while it is displaced by the first moving device 3.

In the embodiment described, this contact takes place while the accumulation device 10 rotates about the second rotation axis X2 to be displaced between the coupling position and the unloading position and simultaneously is displaced along the translation direction T.

These movements can also be associated with a further rotation about the first rotation axis X1 which contributes to the application of the locking strip.

It should be observed that, advantageously, the semi-finished product S is retained by the coupling device 10 during its movement between the first position and the second position and, consequently, also while the finishing processing is performed.

Therefore, this allows the rotating mandrel 11 to be used to obtain a further rotation of the semi-finished product S also while the finishing operation is performed.

It can therefore be observed that, in preferred embodiments, the finishing processing is performed while the coupling device(s) 10 and the semi-finished product S carry out one or more of the following movements: rotation about said first rotation axis X1, rotation about said second rotation axis X2 and movement according to said translation direction T.

The second moving device 5 therefore allows the finishing device to follow the semi-finished product while it performs a part of such movement or combination of movements.

In preferred embodiments, such as the one illustrated in figures from 4A to 4D, the contact between finishing device 4 and semi-finished product S, and therefore also the finishing processing, can take place while the movable body 30 reverses its movement along the translation direction T and while the support 12 rotates about the second rotation axis X2.

As can be observed from the figures, the finishing device 4 is preferably associated with an abutment device 8 by means of which the flap L is abutted during or immediately prior to the application of the strip or of other locking element E.

It will also be appreciated that during the movement between the coupling position and the finishing position of the semi-finished product S a working path P is defined, along which further operations can be performed on the semi-finished product or in general on the strip-shaped article. For this purpose, the apparatus 100 may comprise a cutting device 7 configured so as to cut said strip-shaped article N1, N2, N3, N4 at a cutting zone defined along said working path P at an intermediate position between the coupling position and the finishing position.

Preferably, the cutting device comprises a knife 71 and an auxiliary roller 72, preferably located downstream of the knife 71 itself. The roller 72 can advantageously urge the strip-shaped article, preferably at the flap to be locked, into a stretched configuration, i.e. so as to avoid or limit any lifting of the strip-shaped article during its advancement.

Once the cutting of the strip-shaped article(s) has been carried out, two free ends remain defined, one of which is wound on the coupling device 10 which is brought at the finishing position, thus ending the manufacture of the semi-finished product S, and a second one which is instead wound on the coupling device arranged at the coupling position, which will therefore start the winding on the rotating mandrel 11.

As already mentioned above, once the finishing processing has been completed, the semi-finished product S proceeds with its movement along the operative path up to the unloading position, where it is released by the coupling device 10.

The process can therefore be repeated cyclically, advantageously allowing a continuous movement of the support 12 about the rotation axis X2.

It goes without saying that, in order to meet specific and contingent application needs, a person skilled in the art will be able to make further modifications and variants that are nevertheless within the scope of protection as defined by the following claims.

## Claims

1. Apparatus (100) for manufacturing an electrochemical cell, said electrochemical cell comprising a semi-finished product with an overlapped-layer structure (S), said semi-finished product with an overlapped-layer structure (S) including a plurality of conductor elements (N1, N3) and at least one separator element (N2, N4), said apparatus (100) comprising:
- A feed unit (2) configured to feed said conductor elements (N1, N3) and said at least one separator element (N2, N4);
- A coupling unit (1) including at least a coupling device (10) configured to couple said conductor elements (N1, N3) and said at least one separator element (N2, N4) according to a predetermined layered arrangement, so as to manufacture said semi-finished product with an overlapped-layer structure (S);
- A first moving device (3) configured to displace said semi-finished product with an overlapped-layer structure (S) along an operative path between a first position and a second position, distinct from each other;
- A finishing device (4) configured to perform a finishing processing of said electrochemical cell;
- A second moving device (5) configured so as to displace said finishing device (4) so as to at least partially perform said finishing processing while said first moving device (3) displaces said semi-finished product with an overlapped-layer structure (S) along said operative path between said first position and said second position, so that said semi-finished product with an overlapped-layer structure (S) is displaced along said operative path with a continuous motion.

2. Apparatus (100) according to the preceding claim, wherein said finishing device (4) is configured so as to lock a flap (L) of said at least one separator element (N2, N4) in said semi-finished product with an overlapped-layer structure (S) and to apply a locking element (E) to said flap (L), said locking element preferably being a locking strip.

3. Apparatus (100) according to the preceding claim, comprising an abutment device (8) configured so as to abut said flap (L) during or immediately prior to the application of said locking element (E).

4. Apparatus (100) according to any one of the preceding claims, wherein said first moving device (3) is configured so as to displace said at least one coupling device (10) and said semi-finished product with an overlapped-layer structure (S) according to a translation direction (T).

5. Apparatus (100) according to the preceding claim, wherein said first moving device (3) comprises a movable support (30) configured so as to displace relative to a fixed frame (6) said at least one coupling device (10) and said semi-finished product with an overlapped-layer structure (S) according to said translation direction (T), preferably according to a reciprocating motion.

6. Apparatus (100) according to any one of the preceding claims, wherein said finishing device (4) is supported on a support device (40), and wherein said second moving device (5) is configured so as to displace said support device (40) and said finishing device (4), preferably by swinging said support device (40) about a rotation axis (Z), said second moving device (5) being configured so as to keep said finishing device (4) in contact with said semi-finished product with an overlapped-layer structure (S) while it is displaced by said first moving device (3).

7. Apparatus (100) according to the preceding claim and according to claim 6, wherein said second moving device (5) is configured so as to keep said finishing device (4) in contact with said semi-finished product with an overlapped-layer structure (S) during a reversal of said reciprocating motion.

8. Apparatus (100) according to any one of the preceding claims, when dependent on claim 4, wherein said finishing device (4) is configured so as to perform said finishing processing on said semi-finished product with an overlapped-layer structure (S) while said first moving device (3) and said semi-finished product with an overlapped-layer structure (S) move according to said translation direction (T).

9. Method for manufacturing an electrochemical cell, said electrochemical cell comprising a semi-finished product with an overlapped-layer structure (S) including a plurality of conductor elements (N1, N3) and at least one separator element (N2, N4), preferably for an electrochemical cell intended for producing batteries, said method (100) comprising:
- providing a plurality of conductor elements (N1, N3) and at least one separator element (N2, N4);
- coupling into layers, according to a predetermined arrangement, said conductor elements (N1, N3) and said at least one separator element (N2, N4) so as to form a semi-finished product with an overlapped-layer structure (S);
- displacing said semi-finished product with an overlapped-layer structure (S) along an operative path between a first position and a second position, distinct from each other, said displacing said semi-finished product with an overlapped-layer structure (S) being carried out by a continuous motion;
- performing, at least partially, a finishing processing of said electrochemical cell while said semi-finished product with an overlapped-layer structure (S) is displaced along said operative path between said first position and said second position.

10. Method according to the preceding claim, wherein performing said finishing processing comprises locking a flap (L) of said at least one separator element (N2, N4) and/or said conductor element (N1, N3) in said semi-finished product with an overlapped-layer structure (S), wherein locking said flap (L) of said at least one separator element (N2, N4) and/or said conductor element (N1, N3) comprises applying a locking element (E) to said flap (L), said locking element (E) preferably being a locking strip.

11. Method according to the preceding claim, further comprising retaining said flap, preferably by abutting an abutment device (8), during or immediately prior to the application of said locking element (E).

12. Method according to one of claims 9 to 11, wherein displacing said semi-finished product with an overlapped-layer structure (S) along said operative path between said first position and said second position, comprises translating said semi-finished product with an overlapped-layer structure (S) according to a translation direction (T), said translating being preferably performed according to a reciprocating motion.

13. Method according to any one of claims 9 to 12, wherein said finishing processing is performed by a finishing device (4), said method comprising displacing said finishing device (4) while performing said finishing processing, preferably by swinging said finishing device about a centre of rotation (Z).

14. Method according to claim 12 or 13, wherein said finishing device (4) follows said semi-finished product with an overlapped-layer structure (S), so as to remain in contact with said semi-finished product with an overlapped-layer structure (S), while it is displaced while said finishing processing is being performed.

15. Method according to any one of claims 9 to 14, wherein said conductor elements (N1, N3) and said at least one separator element (N2, N4) are coupled by means of at least one coupling device (10), said method preferably comprising displacing said at least one coupling device (10) and said semi-finished product with an overlapped-layer structure (S) while it is displaced between said first position and said second position.
